# EUROPEAN PATENT SPECIFICATION

(11) **EP 2 631 889 B1**
(45) Date of publication and mention of the grant of the patent: **31.12.2014**
(21) Application number: 12156931.3
(22) Date of filing: 24.02.2012
(51) Int. Cl.: G01C 21/36

(54) **System and Method for Providing Traffic Notifications**
System und Verfahren zur Bereitstellung von Verkehrsbenachrichtigungen
Système et procédé pour la fourniture de notifications de trafic

(43) Date of publication of application: 28.08.2013
(73) Proprietor: BlackBerry Limited, Waterloo, ON N2K 0A7 (CA)
(72) Inventor: Mori, Robert Felice, Mountain View, CA 94041 (US); Yurkonis, Philip Gabriel, Mountain View, CA 94041 (US); Fukumoto, Scott, San Mateo, CA 94401 (US)
(74) Representative: Moore, Barry

(56) References cited:
- GB-A- 2 469 327
- US-A1- 2004 054 468
- US-A1- 2006 046 732
- US-A1- 2008 021 632
- US-A1- 2010 070 589
- US-B1- 6 253 146

## Description

### TECHNICAL FIELD

The following relates to systems and methods for providing traffic notifications.

### DESCRIPTION OF THE RELATED ART

Drivers such as commuters, when possible, typically attempt to avoid heavy traffic. Even when drivers are aware of heavy traffic in a particular area, e.g., via a news report, traffic feed, etc., there are no alternative routes available. For example, a commuter's route home may include a segment of a highway that has no viable alternative due to a bridge, mountain, construction, etc.

Users of mobile electronic communication devices ("mobile devices" hereinafter) such as smart phones, tablet computers, portable global positioning system (GPS) units, in-vehicle navigation systems, and the like, are often able to monitor traffic to both obtain directions, and traffic status updates.

GB 2 469 327 relates to a portable navigation device configured for use in a communications network, comprising, an analysis means arranged to: determine a plurality of routes travelled, or to be travelled, by the portable device; recognise at least one recurrence of at least a portion of a route in the plurality of determined routes; and determine conditions relating to the recognised route at or before a travel time or travel time window relating to the route. In this way, journey patterns can be recognised, and proactively preempted, in order to obtain relevant traffic information which can be communicated to a user of the device before they commence a journey.

### SUMMARY

Accordingly the present teaching provides a method for providing traffic reminder notifications in accordance with claim 1. Advantageous features are defined in the dependent claims.

Accordingly the present teaching provides an electronic device in accordance with claim 13.

Accordingly the present teaching provides a computer readable storage medium in accordance with claim 14.

### BRIEF DESCRIPTION OF THE DRAWINGS

Embodiments will now be described by way of example only with reference to the appended drawings wherein:
FIG. 1 is a schematic diagram of a communication system;
FIG. 2 is a block diagram of an example of a configuration for a mobile device having multiple location-based applications;
FIG. 3 is a screen shot of an example of a traffic application user interface;
FIG. 4 is a screen shot of an example of a traffic application user interface;
FIG. 5 is a screen shot of an example of a maps application user interface including traffic information;
FIG. 6 is a screen shot of an example of a maps application user interface;
FIG. 7 is a screen shot of an example of a navigation application user interface showing a specified route;
FIG. 8 is a screen shot showing an example of a traffic reminder notification being displayed;
FIG. 9 is a screen shot showing an example of a menu of options including an option to trigger a traffic reminder notification;
FIG. 10 is a screen shot showing an example of a user interface for selecting a route to monitor in association with a traffic reminder notification;
FIG. 11 is a flow chart illustrating an example of a set of computer executable operations that may be performed in enabling a traffic reminder notification to be triggered and subsequently displayed;
FIG. 12 is a flow chart illustrating an example of a set of computer executable operations that may be performed in detecting acceptable traffic conditions;
FIG. 13 is a flow chart illustrating an example of a set of computer executable operations that may be performed in determining status of segments in a traffic zone;
FIG. 14 is a flow chart illustrating an example of a set of computer executable operations that may be performed in displaying a traffic reminder notification; and
FIG. 15 is a block diagram of an example of a configuration for a mobile device.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures and components have not been described in detail so as not to obscure the examples described herein. Also, the description is not to be considered as limiting the scope of the examples described herein.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

Although drivers may have access to traffic-related applications on a mobile device, typically the relevant traffic data is reported within an application, e.g., via a table, chart, or map route. In order to be aware of developing traffic conditions in a particular area of traffic or route, the user may be required to either keep the traffic-related application open and running, or periodically consult the traffic data provided by the traffic application.

It has been found that while having a traffic-related application open/running while driving is convenient. However, when an individual has not yet commenced driving, having the application running, or periodically checking the traffic data is not particularly convenient because it can be time-consuming. For example, a commuter that is about to leave work to head home may consult their mobile device or other electronic device to determine traffic conditions before leaving. If that commuter has the option to leave when traffic eases, they may need to frequently monitor the traffic data to determine when is a suitable time to leave.

To address the above drawbacks, a reminder notification is provided that, when set, enables a user to continue with what they had been doing until the mobile device can determine that the traffic conditions have improved. The ability to trigger the reminder notification can be provided in a location-based application such as a maps application, navigation application, or traffic application. Additionally, the ability to trigger the reminder notification can be provided by a module, widget, service, user interface element, or application outside of the location-based applications, to enable the user to trigger the reminder at a convenient time rather than based only on the detection of poor traffic conditions. In this way, the user can trigger the reminder notification when they are thinking of leaving, from within any application or screen that they are currently using.

Additionally, the ability to trigger the reminder notification can be provided in connection with a periodic or otherwise recurring reminder or prompt. For example, a button or option can be included in a calendar reminder having an embedded location that is triggered to alert a driver when it is time to leave, to enable the driver to postpone the calendar reminder to coincide with more favorable traffic conditions, i.e., "better traffic". As such, it can be appreciated that an application or core notification system can be responsible for managing the reminder notification.

By accessing traffic data that this already available to one or more applications on the mobile device, the notification reminder can also be provided as an additional layer on top of an application or operating system without having to develop a new application or modify an existing application. Such a layer can be transparent to the user until a reminder notification is displayed, or provided as a link, widget or other user interface element, for example, in a home screen.

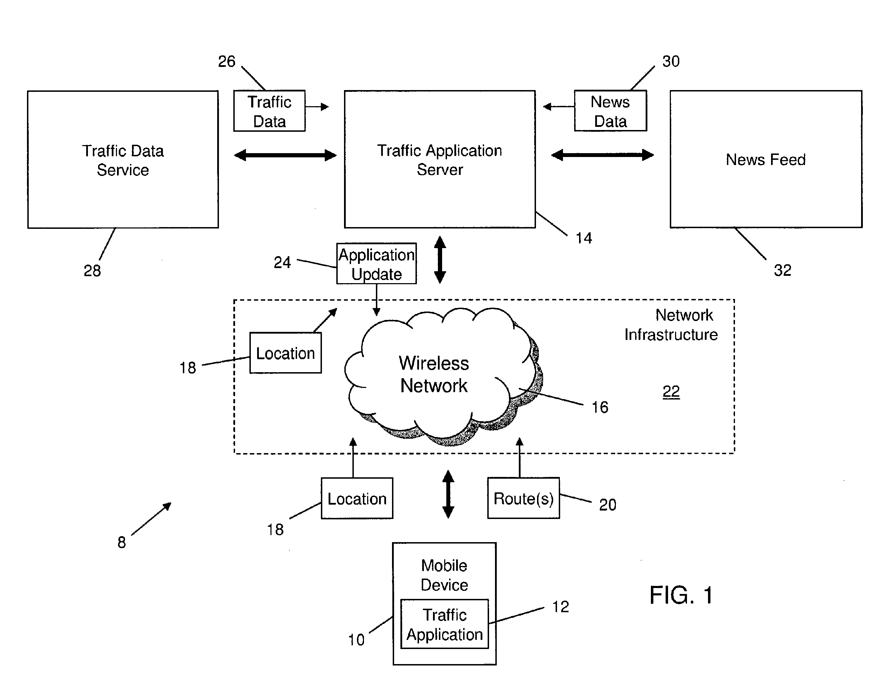

Turning now to FIG. 1, an example of a communication system 8 is shown. In this example, the communication 8 includes a mobile device 10, which has a traffic application 12. The mobile device 10 is operable to communicate with a traffic application server 14 via a wireless network 16. The wireless network 16 is part of a network infrastructure 22. It can be appreciated that the wireless network 16 and network infrastructure 22 in the example shown in FIG. 1 are for illustrative purposes only.

The mobile device 10 provides location data 18 and route data 20 to the traffic application server 14 and obtains application updates 24, e.g., traffic updates, navigation directions, etc., for using the traffic application 12. As shown in FIG. 1, the network infrastructure 22 may also provide location data 18 using, for example, cell tower triangulation or other processes for determining an estimated location for the mobile device 10. The location data 18 provided by the mobile device 10, may be obtained from, for example, a GPS network (not shown) or using other location finding techniques. The route data 20 may include start point and end point coordinates for calculating a route, or may provide the route itself for obtaining traffic data 26 in association with segments along that route.

The traffic application server 14 may generate the application updates 24 using various sources of information. FIG. 1 provides two example sources, a traffic data server 28 providing traffic data 26, and a news feed 32 providing news data 30. It can be appreciated that the data sources and system configuration shown in FIG. 1 are for illustrative purposes only and various other configurations may be possible. For example, the traffic application server 14 may include its own traffic data service 28. Alternatively, the traffic application 12 may be operable to communicate directly with the traffic data service 28 and/or news feed 30 in order to obtain data which may, collectively, provide application updates 24.

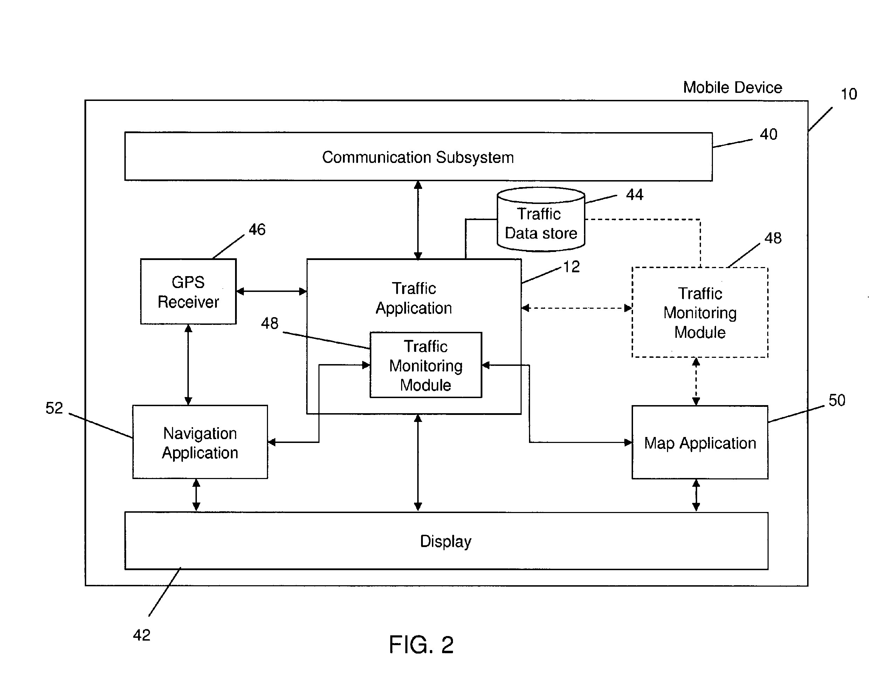

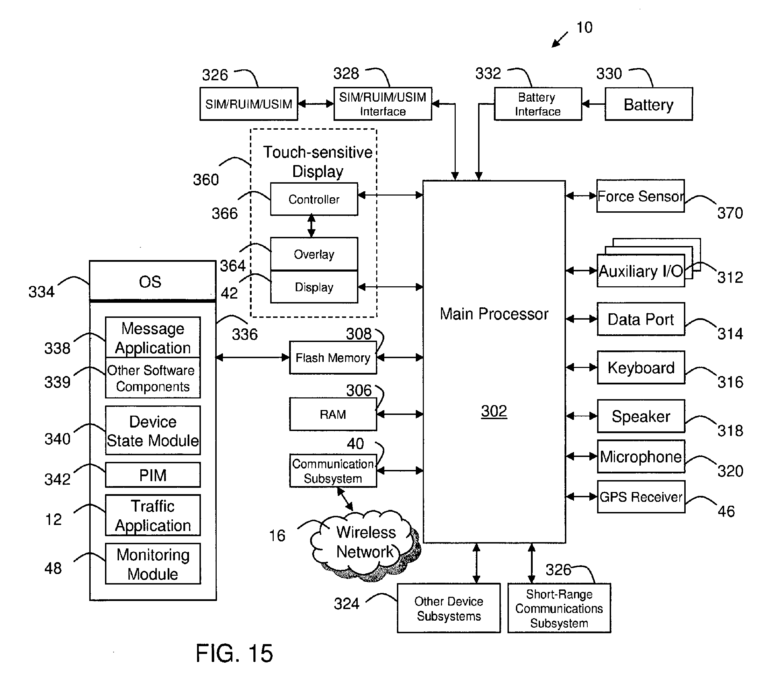

FIG. 2 illustrates an example of a configuration for the mobile device 10. The mobile device 10 includes a communication subsystem 40 for sending and receiving data via the wireless network 16, and includes a display module (display) 42 for rendering graphical user interfaces on a physical display of the mobile device 10. It can be appreciated that the display 42 may also act as an input mechanism, e.g., via touch-sensitivity. Further details concerning various input mechanisms available to the mobile device 10 are described below and shown in FIG. 15. The traffic application 12 is also shown in FIG. 2 and includes or otherwise has access to a traffic data store 44 for storing traffic data 26, application updates 24, etc. The traffic application 12 also includes a traffic monitoring module 48 for enabling a traffic reminder notification to be triggered, for monitoring traffic data 26 and/or application updates 24 to determine when traffic conditions in a particular "traffic zone" have improved, and for enabling the traffic reminder notification to be displayed. Traffic zones, as used herein, may refer to any route or geographical area of interest that is to be monitored. Traffic zones may include various numbers of streets, landmarks, and other data provided by a particular application, such as the traffic application 12. The traffic application 12 and/or traffic monitoring module 48 is/are also communicable with a GPS receiver 46 for obtaining location data 18 for the mobile device 10.

The traffic monitoring module 48 may also be external to any particular application as shown in dashed lines in FIG. 2. For example, the traffic monitoring module 48 may also be operable to enable the traffic reminder notification to be triggered and displayed in association with other location based applications, such as the navigation application 52 and map application 50 shown in FIG. 2, or from within or in association with various other applications, screens, etc. For example, the traffic monitoring module 48 may be linked to an option provided in a menu or other input mechanism in a widget, home screen, messaging application, web browser, etc. In this way, the traffic monitoring module 48 may serve multiple applications and/or be operable across an operating system to provide traffic reminder notifications independent of where the user is currently interacting with the mobile device 10.

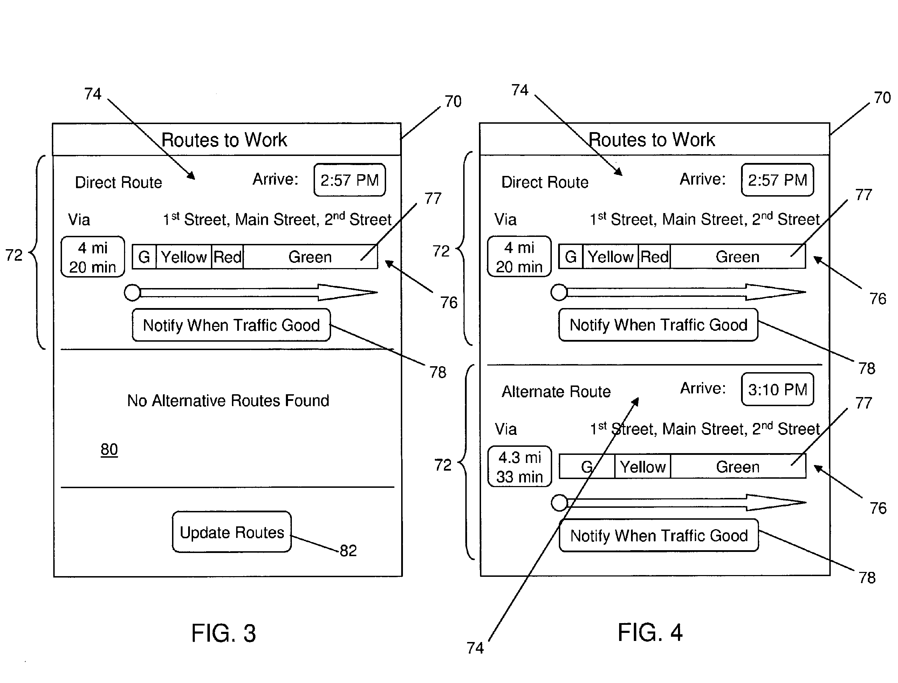

FIG. 3 illustrates an example of a traffic application user interface 70. The traffic application user interface 70 includes one or more route summaries 72. Each route summary 72 displays route information 74, such as the type of route (direct, shortest distance, fastest, etc.), arrival time, waypoints or segments along the route (e.g., street names), distance, total time, etc. The route summary 72 also includes a chart 76 including one or more segments 77. In the example traffic application user interface 70 shown in FIG. 3, each segment 77 is color coded to show relative traffic conditions along each segment. For example, as shown, each segment 77 may be colored green when traffic is good, yellow when traffic is slower than normal, and red when traffic is slow or stopped. By color coding the segments 77, the user can identify where along the route potential traffic congestion is likely to occur.

The route summary 72 also includes a notification button 78 that is displayed to enable the user to trigger a traffic reminder notification. In the example shown in FIG. 3, the notification button 78 is labeled "Notify When Traffic Good", but various other labels may be used to signify that selection of the notification button 78 results in triggering a traffic reminder notification.

When only one route is available, as shown in FIG. 3, the traffic application user interface 70 may include a no alternative routes found portion 80. The traffic application user interface 70 also includes an update routes button 82 to enable the route summaries 72 to be updated with fresh traffic data 26 by obtaining new application updates 24.

FIG. 4 illustrates another example screen shot of the traffic application user interface 70 wherein two route summaries 72 are displayed. In the example shown in FIG. 4, both a direct route and an alternate route are shown with corresponding route information 74, and traffic charts 76. To enable the user to trigger a traffic reminder notification in association with any available route for a particular traffic zone, the notification button 78 may be displayed in association with each route summary 72.

By providing the notification button 78 within the traffic application 12, when a user is viewing a particular route or routes between a start point (e.g., current location), and an end point (e.g., home), and traffic conditions are not currently favorable, the user can select the notification button 78 to be subsequently reminded when the traffic conditions for that traffic zone have improved. This avoids the user having to periodically access the traffic application 12, select the route of interest, and monitor the traffic conditions. Instead, the traffic reminder notification can be triggered to advise the user when the traffic conditions appear to be better, at which time the user may access the traffic application 12 to confirm their route, choose a new route, or may simply begin driving based on the notification, to name a few examples.

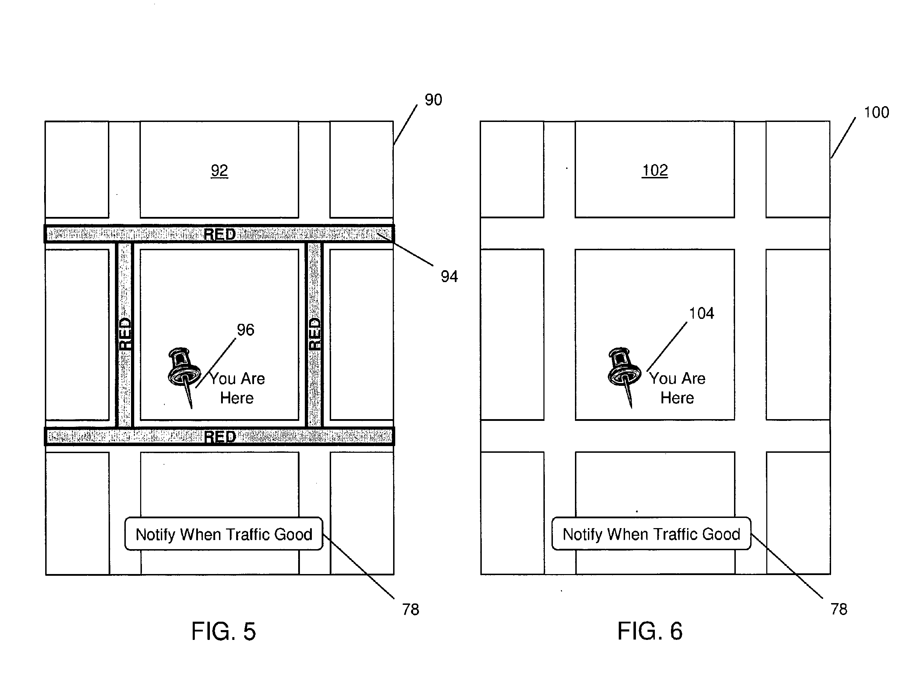

As discussed above, the traffic monitoring module 48 may also monitor traffic zones that correspond to a particular geographical area. A map application user interface 90 is shown in FIG. 5, wherein traffic data 26 is fed to and displayed within a map area 92. In the example shown in FIG. 5, traffic segments 94 are inserted along streets within the map area 92 and, similar to the traffic application user interface 70, are color coded. The map area 92 also includes a current location identifier 96 and the notification button 78 for triggering a traffic reminder notification in association with the currently viewable map area 92. FIG. 5 illustrates an example wherein a commuter is currently at work and is interested in determining local traffic conditions surrounding their place of work. The commuter may consult the traffic segments 94 shown in the map area 92 to determine when to leave work. Rather than periodically accessing the map application user interface 90 to determine when traffic has eased, the commuter may instead select the notification button 78 to trigger a traffic reminder notification when traffic is better, e.g., when the current red segments 94 change to yellow or green.

The notification button 78 may also be displayed in a map application user interface 100 that does not include traffic information, e.g., as shown in FIG. 6. Providing the notification button 78 in the map application user interface 100, a user may zoom in or out to define a geographical map area 102 that is of interest, e.g., surrounding their current location as specified by a current location identifier 104, and have the traffic monitoring module 48 notify the user when traffic is considered "good" in that area. This defined area of interest may relate to only a portion of the user's total planned journey.

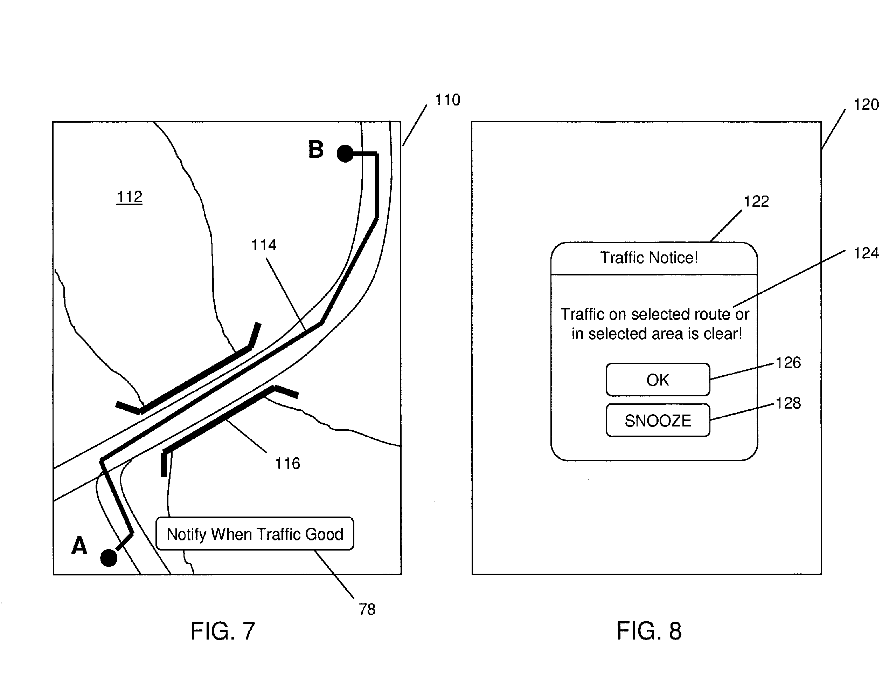

A navigation application user interface 110 may also include the notification button 78 as shown in FIG. 7. In this way, after selecting and generating a route between points A and B, the user may select the notification button 78 to have the traffic monitoring module 48 notify the user when traffic is acceptable. For example, a user that is about to leave on an extended trip may select the notification button 78 to determine an appropriate time to leave, based on traffic conditions.

An example of a traffic reminder notification user interface ("notification user interface" hereinafter) 122 is shown in FIG. 8. In the example shown in FIG. 8, the notification user interface 122 is displayed within a display screen 120, shown generically in FIG. 8 to illustrate that the notification user interface 122 can be displayed in any screen to provide the traffic notification reminder independent of location based applications or the application from which the notification button 78 has been selected. The notification user interface 122 includes a notification message 124 (in this example: "Traffic on selected route or in selected area is clear!"), an OK button 126 to confirm the reminder, and a snooze button 128 to defer the reminder. The snooze button 128 can be used to, for example, have the notification reminder repeated at a later time. It can be appreciated that the snooze button 128, when selected, may cause the traffic monitoring module 48 to operate according to predetermined criteria, or may cause an additional user interface (not shown) to be displayed which enables selection of a particular "snooze time". For example, a predetermined criterion for the snooze operation may include the later of 10 minutes or next indication that traffic is good.

The snooze button 128 can also trigger a follow up reminder that indicates, at a predetermined subsequent time, the current status of the traffic conditions in the associated traffic zone. For example, the user may select the snooze button 128, which causes a delay in the traffic reminder notification of 10 minutes. However, in the intervening 10 minutes, traffic may have deteriorated. Rather than delaying the snooze operation until traffic again improves, the notification user interface 122 may be modified to include a reminder message 124 that indicates traffic has worsened and enable a further snooze or option to not notify the user again until traffic is acceptable. Therefore, it can be appreciated that the notification user interface 122 can be used to provide a control console for managing the propagation of traffic reminders into the future to accommodate changing conditions in the users schedule and changing traffic conditions based on that schedule.

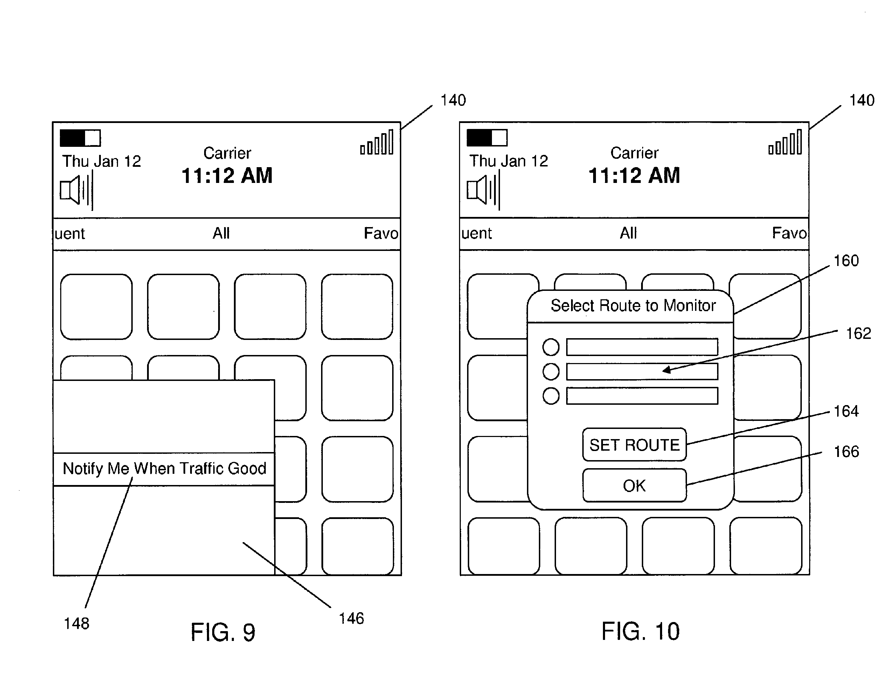

In addition to providing the notification button 78, a traffic reminder notification can also be triggered using other input mechanisms. For example, a menu of options 146 may be invoked from a home screen user interface 140 as shown in FIG. 9. The menu of options 146 includes a traffic notification option 148 (labeled: "Notify Me When Traffic Good") that, when selected, triggers the traffic reminder notification in a manner similar to selecting the notification button 78. When triggered independent of a location-based application, the traffic notification reminder may need to be associated with a particular traffic zone, such as a geographical area or route. Selection of the traffic notification option 148 may, for example, initiate a location based application in order to have the user select a traffic zone, or may, as shown in FIG. 10, enable selection from predetermined traffic zones such as saved routes. It can be appreciated that the traffic monitoring module 48 may obtain saved routes or other traffic zones from, for example, the navigation application 52, traffic application 12, map application 50, etc.; or may provide a user interface to enable a user to customize routes for the traffic reminder notifications.

Referring to FIG. 10, a route selection user interface 160 is shown, which may be displayed by the traffic monitoring module 48 after detecting selection of the traffic notification option 148. The route selection user interface 160 includes a list 162 of predefined routes and a set route button 164. By selecting one of the routes from the list 162, traffic data 26 associated with segments within that route are referenced by the traffic monitoring module 48 in determining when to display a traffic reminder notification. By selecting the set route button 164, the user is provided with an opportunity to define a route. For example, a separate user interface (not shown) may be displayed enabling the user to specify start and end points, geographical areas, etc. By selecting an OK button 166, a selected or defined route can be accepted.

As discussed above, the traffic reminder notification may be controlled and triggered in various ways, using various mechanisms. In addition to the examples shown in FIGS. 1-10, it can be appreciated that other user interface elements may be used. For example, the home screen 140 shown in FIG. 9 may be adapted to include an icon or other visual element in the banner (upper) portion that indicates when traffic is acceptable, in a manner similar to the way in which identifiers are displayed for new incoming messages, calendar appointments, and the like. Similarly, the notification button 78 may be included directly in the home screen 140 or layered over any other application currently running. The provision of the notification button 78 can also be tied to daily events or other reminders. For example, a daily calendar reminder can be used to have a first reminder that the time to leave has arrived and the notification button 78 included to enable the traffic reminder notification to be triggered. Such a calendar reminder can include a destination location or other geographical location to enable the traffic monitoring module 48 to determine what traffic data 26 to reference. The home screen 140 or other application screen may also include a traffic widget that provides the functionalities herein described in a separate, standalone user interface element, to further facilitate the use of the traffic reminder notification at any time, from anywhere in the user interface flow.

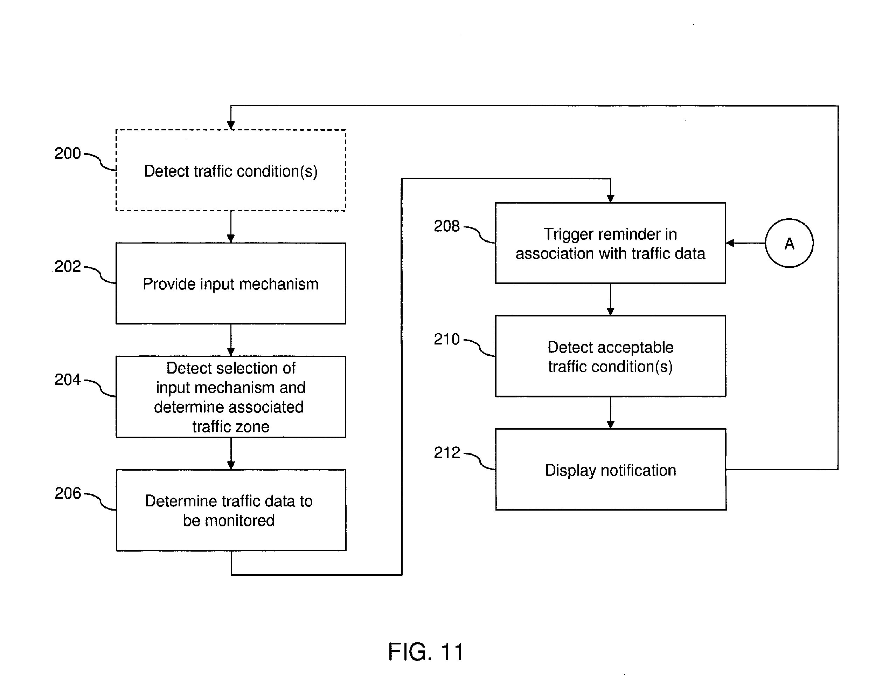

FIG. 11 provides a flow chart illustrating an example of a set of computer executable operations that may be performed in enabling a traffic reminder notification to be triggered and subsequently displayed by the traffic monitoring module 48. The operations shown by way of example in FIG. 11 may be executed automatically while a location based application is running and/or while such an application is in the foreground of the display of the mobile device 10. For example, at 200, traffic conditions may be detected while a location based application is running, at which time an input mechanism such as the notification button 78 is displayed at 202. The operations may also begin at 202, wherein a user initiates the menu of options 146, the notification button 78 is always displayed, etc. After providing the input mechanism at 202, the traffic monitoring module 48 detects at 204, a selection of the input mechanism and determines an associated traffic zone. This may include capturing a currently viewable map area, determining a currently viewable route, enabling selection of a predetermined route, enabling a new route to be defined, etc. After the associated traffic zone is determined at 204, the traffic monitoring module 48 determines the traffic data 26 and/or application updates 24 that should be monitored in order to determine if a traffic condition is acceptable thus warranting a traffic reminder notification.

The traffic monitoring module 48 may then trigger a reminder in association with the determined traffic data 26 at 208 in order to enable detection of acceptable traffic conditions at 210. For example, after triggering a reminder at 208, the traffic monitoring module 48 may then monitor application updates 24 fed by the traffic application server 14 to determine when predetermined criteria have been met, e.g., when segments in the traffic zone are green. After detecting that traffic conditions are acceptable at 210, the traffic monitoring module 48 displays the traffic reminder notification at 212, e.g., by displaying the notification user interface 122 shown in FIG. 8.

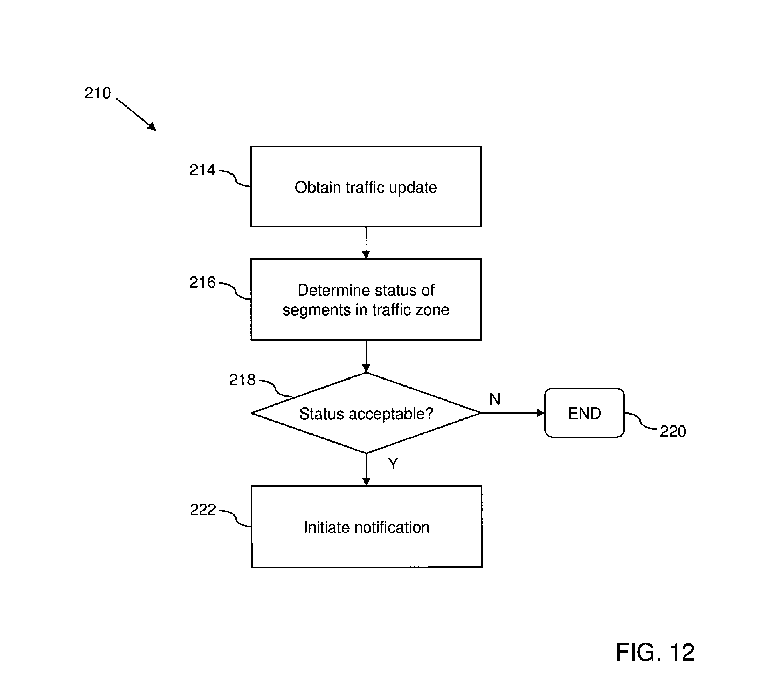

FIG. 12 provides a flow chart illustrating an example of a set of computer executable operations that may be performed in detecting acceptable traffic conditions at 210. At 214, the traffic monitoring module 48 obtains a traffic update (e.g., via an application update 24 provided by the traffic application server 14), and determines the status of segments in the associated traffic zone at 216. As discussed above, each traffic zone may include a number of segments along a route or within a particular geographical area, each segment typically comprising a length of roadway. In this example, data associated with each segment is provided and indicates the traffic conditions in or along that segment. For example, during rush hour, traffic moving along a particular segment may be moving at less than 10 mph on average in a 55 mph speed zone, indicating congested traffic. At 218, the traffic monitoring module 48 determines if the traffic data 26 is indicative of an acceptable traffic status. If not, the process ends at 220. If the traffic is determined to be acceptable in the traffic zone being monitored, the traffic reminder notification is initiated at 222.

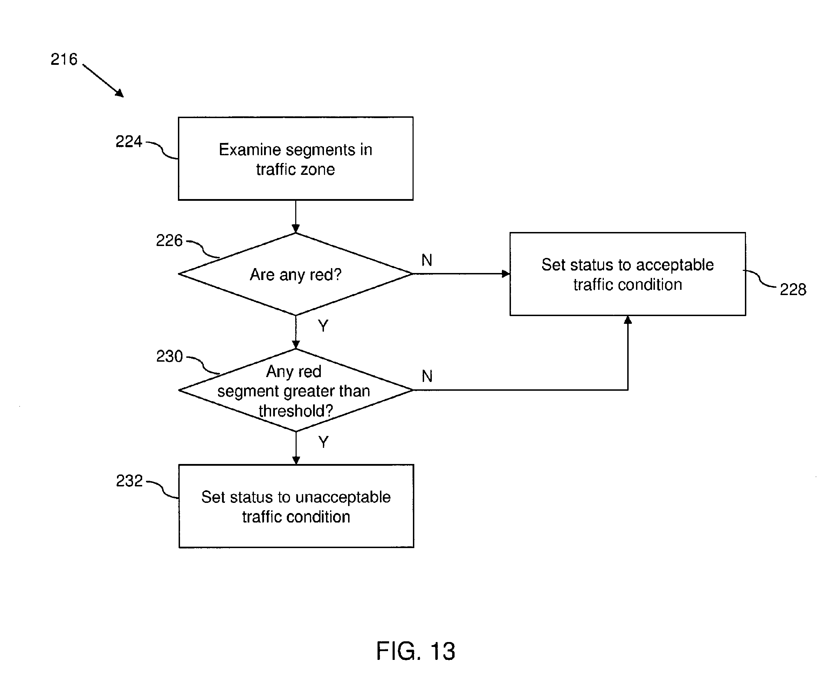

FIG. 13 provides a flow chart illustrating an example of a set of computer executable operations that may be performed in determining statuses of segments in a traffic zone at 216. In the example shown in FIG. 13, it is assumed that application updates 24 are provided by the traffic application server 14, which report a green, yellow, or red status for various traffic segments. At 224, the traffic monitoring module 48 examines the segments for the traffic zone being monitored and determines at 226 if any of the segments are red 226. If one or more of the segments are red, indicating slow traffic in at least one portion of the traffic zone, the traffic monitoring module 48 then determines at 230 if any of the red segments are greater in distance than a predetermined threshold. For example, to avoid reporting poor traffic conditions due to stop lights or other relatively minor delays, the traffic monitoring module 48 may filter for only red segments that are longer than a predetermined distance, e.g., 100 yards. If at least one red segment is above the threshold, the status of the traffic conditions is set to be unacceptable at 232. If there are no red segments above the threshold, the status of the traffic conditions is set to be acceptable at 228.

It can be appreciated that various other processes or algorithms may be used to determine if traffic is acceptable according to traffic data and other information available to the mobile device 10; and such processes and algorithms can apply rigid rules or incorporate user preferences, options, selections, behaviors, etc. One way to determine if traffic is acceptable to a particular driver is to have the driver select tolerances or preferences for what constitutes "bad traffic". For example, some drivers may find a few severe slow downs in traffic to be more acceptable than an overall slow pace along an entire route. By taking such preferences into consideration, one route that has a reasonable pace on average may not be considered acceptable traffic, due to several short severe slowdowns; whereas another route that has a relatively slow pace overall, but without any severe slowdowns, is considered acceptable traffic.

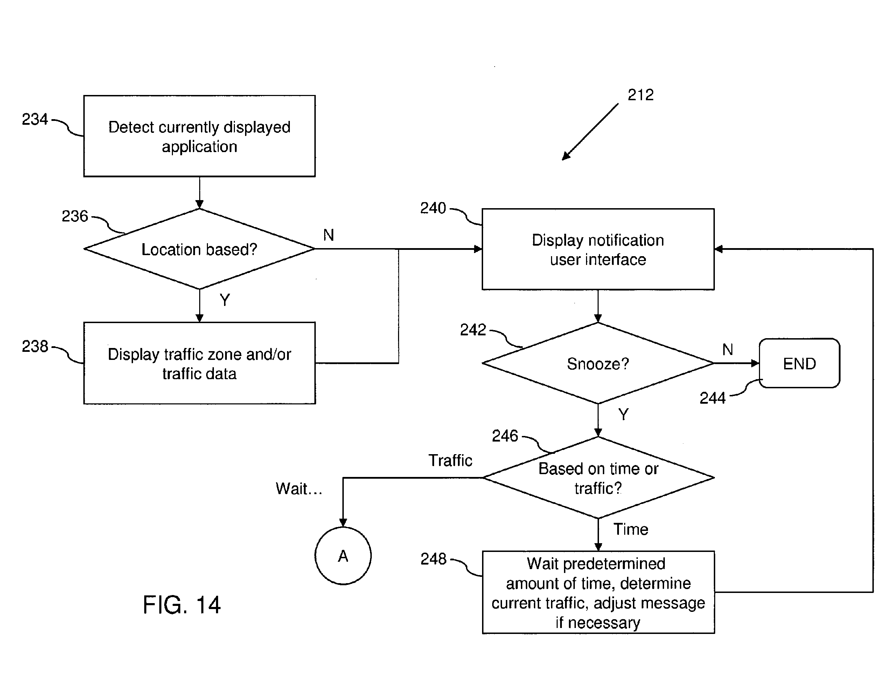

FIG. 14 provides a flow chart illustrating an example of a set of computer executable operations that may be performed in displaying a traffic reminder notification at 212 (FIG. 11). At 234, the traffic monitoring module 48 detects the currently displayed application (if any) and determines at 236 if the currently displayed application is location based. If so, the traffic zone being monitored and/or traffic data 26 for the traffic zone is/are displayed at 238. The notification user interface 122 may then be displayed at 240, either on its own or in conjunction with the traffic zone and/or traffic data 26. As discussed above, the notification user interface 122 may include an OK button 126 to confirm receipt of the notification, and a snooze button 128 to defer the notification. While the notification user interface 122 is being displayed the traffic monitoring module 48 may thus determine if the snooze button 128 has been selected. If not, the process ends at 244. If the snooze button 128 has been selected, the traffic monitoring module 48 then determines at 246 whether or not the snooze operation is to be executed according to time (e.g., delay of 10 minutes), or based on the traffic conditions (e.g., do not display again unless traffic is still good after a set period of time). If the snooze operation is to be executed based on time, the traffic monitoring module 48 removes the notification user interface 122 from the display of the mobile device 10, waits the predetermined amount of time, determines the current traffic conditions after the delay, and adjusts the notification message 124 for the new current traffic conditions at 248. In this way, the notification user interface 122 may be displayed again at 240 after the associated time delay with updated traffic conditions reported, whether acceptable or unacceptable.

If the snooze operation is based on the traffic conditions, the traffic monitoring module 48 waits the predetermined amount of time associated with the snooze operation, and then returns to operation 208 shown in FIG. 11 by following path A. It can be appreciated that the operations shown in FIG. 11 may be running periodically and thus path A may instead have the traffic monitoring module 48 continue at its normal periodic monitoring rather than skipping to operation 208 along path A.

It can therefore be appreciated that by enabling a notification button 78, traffic notification option 148, or other input mechanism to be provided both internal and external to location based applications, a user may be notified of changes in traffic conditions without having to periodically consult such location based applications.

The principles discussed above may also be applicable to other devices, including "non-mobile" devices such as desktop computers. For example, providing a notification button 78 in a location based application or web page displayed on a desktop computer can also enable a user to be notified of easing traffic conditions without having to continually consult the application or web page. If that user also has a mobile device that is communicable with the desktop computer, it can be appreciated that traffic reminder notifications, e.g., snooze operations can also be ported or pushed to the mobile device, e.g., if the user plans to leave an office and continue monitoring using a mobile device.

Referring to FIG. 15, to further aid in the understanding of the example mobile devices 10 described above, shown therein is a block diagram of an example configuration of a mobile device 10. The mobile device 10 includes a number of components such as a main processor 302 that controls the overall operation of the mobile device 10. Communication functions, including data and voice communications, are performed through a communication subsystem 40. The communication subsystem 40 receives messages from and sends messages to a wireless network 16. In this example of the mobile device 10, the communication subsystem 40 is configured in accordance with the Global System for Mobile Communication (GSM) and General Packet Radio Services (GPRS) standards, which is used worldwide. Other communication configurations that are equally applicable are the 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behavior described herein, and it will also be understood by persons skilled in the art that the examples described herein are intended to use any other suitable standards that are developed in the future. The wireless link connecting the communication subsystem 40 with the wireless network 16 represents one or more different Radio Frequency (RF) channels, operating according to defined protocols specified for GSM/GPRS communications.

The main processor 302 also interacts with additional subsystems such as a Random Access Memory (RAM) 306, a flash memory 308, a touch-sensitive display 360, an auxiliary input/output (I/O) subsystem 312, a data port 314, a keyboard 316 (physical, virtual, or both), a speaker 318, a microphone 320, a GPS receiver 46, short-range communications subsystem 326, and other device subsystems 324. Some of the subsystems of the mobile device 10 perform communication-related functions, whereas other subsystems may provide "resident" or on-device functions. By way of example, the display 42 and the keyboard 316 may be used for both communication-related functions, such as entering a text message for transmission over the wireless network 16, and device-resident functions such as a calculator or task list. In one example, the mobile device 10 can include a non touch-sensitive display in place of, or in addition to the touch-sensitive display 360. For example the touch-sensitive display 360 can be replaced by a display 42 that may not have touch-sensitive capabilities.

The mobile device 10 can send and receive communication signals over the wireless network 16 after required network registration or activation procedures have been completed. Network access is associated with a subscriber or user of the mobile device 10. To identify a subscriber, the mobile device 10 may use a subscriber module component or "smart card" 326, such as a Subscriber Identity Module (SIM), a Removable User Identity Module (RUIM) and a Universal Subscriber Identity Module (USIM). In the example shown, a SIM/RUIM/USIM 326 is to be inserted into a SIM/RUIM/USIM interface 328 in order to communicate with a network.

The mobile device 10 is typically a battery-powered device and includes a battery interface 332 for receiving one or more rechargeable batteries 330. In at least some examples, the battery 330 can be a smart battery with an embedded microprocessor. The battery interface 332 is coupled to a regulator (not shown), which assists the battery 330 in providing power to the mobile device 10. Although current technology makes use of a battery, future technologies such as micro fuel cells may provide the power to the mobile device 10.

The mobile device 10 also includes an operating system 334 and software components 336 to 342, 12, and 48. The operating system 334 and the software components 336 to 346 that are executed by the main processor 302 are typically stored in a persistent store such as the flash memory 308, which may alternatively be a read-only memory (ROM) or similar storage element (not shown). Those skilled in the art will appreciate that portions of the operating system 334 and the software components 336 to 342, 12, and 48, such as specific device applications, or parts thereof, may be temporarily loaded into a volatile store such as the RAM 306. Other software components can also be included, as is well known to those skilled in the art.

The subset of software applications 336 that control basic device operations, including data and voice communication applications, may be installed on the mobile device 10 during its manufacture. Software applications may include a message application 338, a device state module 340, a Personal Information Manager (PIM) 342, a traffic application 12 (see also FIG. 2), and a traffic monitoring module 48 (see also FIG. 2). A message application 338 can be any suitable software program that allows a user of the mobile device 10 to send and receive electronic messages, wherein messages are typically stored in the flash memory 308 of the mobile device 10. A device state module 340 provides persistence, i.e. the device state module 340 ensures that important device data is stored in persistent memory, such as the flash memory 308, so that the data is not lost when the mobile device 10 is turned off or loses power. A PIM 342 includes functionality for organizing and managing data items of interest to the user, such as, but not limited to, e-mail, contacts, calendar events, and voice mails, and may interact with the wireless network 16.

Other types of software applications or components 339 can also be installed on the mobile device 10. These software applications 339 can be pre-installed applications (i.e. other than message application 338) or third party applications, which are added after the manufacture of the mobile device 10. Examples of third party applications include games, calculators, utilities, etc.

The additional applications 339 can be loaded onto the mobile device 10 through at least one of the wireless network 16, the auxiliary I/O subsystem 312, the data port 314, the short-range communications subsystem 326, or any other suitable device subsystem 324.

The data port 314 can be any suitable port that enables data communication between the mobile device 10 and another computing device. The data port 314 can be a serial or a parallel port. In some instances, the data port 314 can be a USB port that includes data lines for data transfer and a supply line that can provide a charging current to charge the battery 330 of the mobile device 10.

For voice communications, received signals are output to the speaker 318, and signals for transmission are generated by the microphone 320. Although voice or audio signal output is accomplished primarily through the speaker 318, the display 42 can also be used to provide additional information such as the identity of a calling party, duration of a voice call, or other voice call related information.

The touch-sensitive display 360 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example, the touch-sensitive display 360 is a capacitive touch-sensitive display which includes a capacitive touch-sensitive overlay 364. The overlay 364 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 42 of the touch-sensitive display 360 may include a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 360. The processor 302 may determine attributes of the touch, including a location of a touch. Touch location data may include an area of contact or a single point of contact, such as a point at or near a center of the area of contact, known as the centroid. A signal is provided to the controller 366 in response to detection of a touch. A touch may be detected from any suitable object, such as a finger, thumb, appendage, or other items, for example, a stylus, pen, or other pointer, depending on the nature of the touch-sensitive display 360. The location of the touch moves as the detected object moves during a touch. The controller 366 and/or the processor 302 may detect a touch by any suitable contact member on the touch-sensitive display 360. Similarly, multiple simultaneous touches, are detected.

One or more gestures are also detected by the touch-sensitive display 360. A gesture is a particular type of touch on a touch-sensitive display 360 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An example of a gesture is a swipe (also known as a "flick"). A swipe has a single direction. The touch-sensitive overlay 364 may evaluate swipes with respect to the origin point at which contact is initially made with the touch-sensitive overlay 364 and the end point at which contact with the touch-sensitive overlay 364 ends rather than using each of location or point of contact over the duration of the gesture to resolve a direction.

Examples of swipes include a horizontal swipe, a vertical swipe, and a diagonal swipe. A horizontal swipe typically comprises an origin point towards the left or right side of the touch-sensitive overlay 364 to initialize the gesture, a horizontal movement of the detected object from the origin point to an end point towards the right or left side of the touch-sensitive overlay 364 while maintaining continuous contact with the touch-sensitive overlay 364, and a breaking of contact with the touch-sensitive overlay 364. Similarly, a vertical swipe typically comprises an origin point towards the top or bottom of the touch-sensitive overlay 364 to initialize the gesture, a horizontal movement of the detected object from the origin point to an end point towards the bottom or top of the touch-sensitive overlay 364 while maintaining continuous contact with the touch-sensitive overlay 364, and a breaking of contact with the touch-sensitive overlay 364.

Swipes can be of various lengths, can be initiated in various places on the touch-sensitive overlay 364, and need not span the full dimension of the touch-sensitive overlay 364. In addition, breaking contact of a swipe can be gradual in that contact with the touch-sensitive overlay 364 is gradually reduced while the swipe is still underway.

Meta-navigation gestures may also be detected by the touch-sensitive overlay 364. A meta-navigation gesture is a gesture that has an origin point that is outside the display area of the touch-sensitive overlay 364 and that moves to a position on the display area of the touch-sensitive display. Other attributes of the gesture may be detected and be utilized to detect the meta-navigation gesture. Meta-navigation gestures may also include multi-touch gestures in which gestures are simultaneous or overlap in time and at least one of the touches has an origin point that is outside the display area and moves to a position on the display area of the touch-sensitive overlay 364. Thus, two fingers may be utilized for meta-navigation gestures. Further, multi-touch meta-navigation gestures may be distinguished from single touch meta-navigation gestures and may provide additional or further functionality.

In some examples, an optional force sensor 370 or force sensors is disposed in any suitable location, for example, between the touch-sensitive display 360 and a back of the mobile device 10 to detect a force imparted by a touch on the touch-sensitive display 360. The force sensor 370 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

It will be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, any component of or related to the communication system 8, network infrastructure 22, etc., or accessible or connectable thereto. Any application or module herein described may be implemented using computer readable/executable instructions that may be stored or otherwise held by such computer readable media.

The steps or operations in the flow charts and diagrams described herein are just for example. There may be many variations to these steps or operations without departing from the principles discussed above. For instance, the steps may be performed in a differing order, or steps may be added, deleted, or modified.

Although the above principles have been described with reference to certain specific examples, various modifications thereof will be apparent to those skilled in the art as outlined in the appended claims.

## Claims

1. A method of providing traffic reminder notifications (122), the method comprising:
detecting the selection of an input mechanism by a user which triggers a reminder notification for a predetermined traffic zone;
determining traffic data (24) to be monitored in the predetermined traffic zone; and
displaying the reminder notification (122) after determining a good traffic condition in the predetermined traffic zone.

2. The method of claim 1, the input mechanism being displayed in a location based application (12, 50, 52).

3. The method of claim 2, the location based application (12, 50, 52) comprising one or more of a traffic application (12), a map application (50), and a navigation application (52).

4. The method of claim 1, wherein the reminder notification (122) can be triggered outside of a location based application (12, 50, 52).

5. The method of any one of claims 1 to 4, further comprising providing a snooze button (128) within the traffic reminder notification (122).

6. The method of claim 5, wherein the snooze function (128) delays displaying of another traffic reminder notification (122) according to any one or more of time and traffic conditions.

7. The method of any one of claims 1 to 6, wherein status data is associated with each segment of the predetermined traffic zone and said good traffic condition is determined based on the status data.

8. The method of claim 7, the status identifiers being color coded for use in displaying traffic conditions in a location based application (12, 50, 52).

9. The method of claim 8, further comprising determining the good traffic condition when none of the segments (77, 94, 114) in the traffic zone are of a particular color indicative of a poor traffic condition.

10. The method of claim 9, further comprising disregarding segments (77, 94, 114) that are less than a predetermined size.

11. The method of any one of claims 1 to 10, the traffic reminder notification being displayed using an electronic device.

12. The method of claim 11, the electronic device comprising a mobile device (10).

13. An electronic device comprising a processor (302), a memory (308), and a display (42), the memory (308) comprising computer executable instructions for providing traffic reminder notifications (122), the computer executable instructions comprising instructions for performing the method according to any one of claims 1 to 12.

14. A computer readable storage medium comprising computer executable instructions for providing traffic reminder notifications (122), the computer executable instructions comprising instructions for performing the method according to any one of claims 1 to 12.

## Patentansprüche

1. Ein Verfahren zum Bereitstellen von Verkehrserinnerungsbenachrichtigungen (122), wobei das Verfahren umfasst:
Detektieren der Auswahl von einem Eingabemechanismus durch einen Benutzer, der eine Erinnerungsbenachrichtigung für eine vorbestimmte Verkehrszone auslöst;
Bestimmen, dass Verkehrsdaten (24) in der vorbestimmten Verkehrszone überwacht werden,
Anzeigen der Erinnerungsbenachrichtigung (122) nach Bestimmen einer guten Verkehrsbedingung in der vorbestimmten Verkehrszone.

2. Das Verfahren nach Anspruch 1, wobei der Eingabemechanismus in einer positionsbasierten Anwendung (12, 50, 52) angezeigt wird.

3. Das Verfahren nach Anspruch 2, wobei die positionsbasierte Anwendung (12, 50, 52) eine oder mehrere einer Verkehrsanwendung (12), einer Kartenanwendung (50) und einer Navigationsanwendung (52) umfasst.

4. Das Verfahren nach Anspruch 1, wobei die Erinnerungsbenachrichtigung (122) außerhalb einer positionsbasierten Anwendung (12, 50, 52) ausgelöst werden kann.

5. Das Verfahren nach einem der Ansprüche 1 bis 4, ferner umfassend ein Bereitstellen eines Schlummerknopfes (128) in der Verkehrserinnerungsbenachrichtigung (122).

6. Das Verfahren nach Anspruch 5, wobei die Schlummerfunktion (128) ein Anzeigen einer anderen Verkehrserinnerungsbenachrichtigung (122) gemäß einer oder mehrerer von Zeit und Verkehrsbedingungen verzögert.

7. Das Verfahren nach einem der Ansprüche 1 bis 6, wobei Statusdaten mit jedem Segment der vorbestimmten Verkehrszone assoziiert sind und die gute Verkehrsbedingung basierend auf den Statusdaten bestimmt wird.

8. Das Verfahren nach Anspruch 7, wobei die Statusidentifizierer farbkodiert sind zur Benutzung beim Anzeigen der Verkehrsbedingungen in einer positionsbasierte Anwendung (12, 50, 52).

9. Das Verfahren nach Anspruch 8, ferner umfassend ein Bestimmen der guten Verkehrsbedingung wenn keines der Segmente (77, 94, 114) in der Verkehrszone von einer bestimmten Farbe sind, die eine schlechte Verkehrsbedingung angibt.

10. Das Verfahren nach Anspruch 9, ferner umfassend ein Vernachlässigen von Segmenten (77, 94, 114) die weniger als eine vorbestimmte Größe aufweisen.

11. Das Verfahren nach einem der Ansprüche 1 bis 10, wobei die Verkehrserinnerungsbenachrichtigung unter Benutzung einer elektronischen Vorrichtung angezeigt wird.

12. Das Verfahren nach Anspruch 11, wobei die elektronische Vorrichtung eine mobile Vorrichtung (10) umfasst.

13. Ein elektronische Vorrichtung umfassend einen Prozessor (302), einen Speicher (308) und eine Anzeige (42), wobei der Speicher (308) computerausführbare Instruktionen zum Bereitstellen von Verkehrserinnerungsbenachrichtigungen (122) umfasst, wobei die computerausführbaren Instruktionen Instruktionen umfassen zum Durchführen des Verfahrens gemäß einem der Ansprüche 1 bis 12.

14. Ein computerlesbares Speichermedium, das computerausführbare Instruktionen zum Bereitstellen von Verkehrserinnerungsbenachrichtigungen (122) umfasst, wobei die computerausführbaren Instruktionen Instruktionen umfassen zum Durchführen des Verfahrens gemäß einem der Ansprüche 1 bis 12.

## Revendications

1. Procédé de fourniture de notifications de rappel de trafic (122), le procédé comprenant :
la détection de la sélection d'un mécanisme d'entrée par un utilisateur qui déclenche une notification de rappel pour une zone de trafic prédéterminée ;
la détermination de données de trafic (24) à surveiller dans la zone de trafic prédéterminée ; et
l'affichage de la notification de rappel (122) après la détermination d'une bonne condition de trafic dans la zone de trafic prédéterminée.

2. Procédé selon la revendication 1, le mécanisme d'entrée étant affiché dans une application basée sur la localisation (12, 50, 52).

3. Procédé selon la revendication 2, l'application basée sur la localisation (12, 50, 52) comprenant une ou plusieurs parmi une application de trafic (12), une application de carte (50), et une application de navigation (52).

4. Procédé selon la revendication 1, dans lequel la notification de rappel (122) peut être déclenchée en dehors d'une application basée sur la localisation (12, 50, 52).

5. Procédé selon l'une quelconque des revendications 1 à 4, comprenant en outre la fourniture d'un bouton snooze (128) à l'intérieur de la notification de rappel de trafic (122).

6. Procédé selon la revendication 5, dans lequel la fonction snooze (128) retarde l'affichage d'une autre notification de rappel de trafic (122) selon l'une quelconque ou plusieurs parmi des conditions de temps et de trafic.

7. Procédé selon l'une quelconque des revendications 1 à 6, dans lequel des données de statut sont associées à chaque segment de la zone de trafic prédéterminée et ladite bonne condition de trafic est déterminée sur la base des données de statut.

8. Procédé selon la revendication 7, les identificateurs de statut étant codés couleur pour une utilisation dans l'affichage de conditions de trafic dans une application basée sur la localisation (12, 50, 52).

9. Procédé selon la revendication 8, comprenant en outre la détermination de la bonne condition de trafic lorsqu'aucun des segments (77, 94, 114) dans la zone de trafic n'est d'une couleur particulière indicative d'une mauvaise condition de trafic.

10. Procédé selon la revendication 9, comprenant en outre le fait de ne pas tenir compte des segments (77, 94, 114) qui sont inférieurs à une taille prédéterminée.

11. Procédé selon l'une quelconque des revendications 1 à 10, la notification de rappel de trafic étant affichée en utilisant un dispositif électronique.

12. Procédé selon la revendication 11, le dispositif électronique comprenant un dispositif mobile (10).

13. Dispositif électronique comprenant un processeur (302), une mémoire (308), et un afficheur (42), la mémoire (308) comprenant des instructions exécutables par ordinateur pour fournir des notifications de rappel de trafic (122), les instructions exécutables par ordinateur comprenant des instructions pour effectuer le procédé selon l'une quelconque des revendications 1 à 12.

14. Support de stockage lisible par ordinateur comprenant des instructions exécutables par ordinateur pour fournir des notifications de rappel de trafic (122), les instructions exécutables par ordinateur comprenant des instructions pour effectuer le procédé selon l'une quelconque des revendications 1 à 12.
